# FASCICULE DE BREVET EUROPEEN

(11) **EP 1 819 067 B1**
(45) Date de publication et mention de la délivrance du brevet: **14.09.2011**
(21) Numéro de dépôt: 06300119.2
(22) Date de dépôt: 08.02.2006
(51) Int. Cl.: H04B 7/185

(54) **Procédé de synchronisation des transmissions de signaux d'utilisateurs dans un réseau de communication hybride**
Verfahren zur Synchronization von Übertragungen an Anwender in einem hybriden Funkübertragungsnetzwerk
Method of synchronizing transmissions to users in a hybrid telecommunications network

(43) Date de publication de la demande: 15.08.2007
(73) Titulaire: Alcatel Lucent, 75008 Paris (FR)
(72) Inventeur: Blineau, Joseph, 31321 Pechabou (FR); Chuberre, Nicolas, 31820 Pibrac (FR); Cohen, Michel, 75011 Paris (FR); Courseille, Olivier, 31320 Auzeville (FR)
(74) Mandataire: Ameline, Jean-Paul B.C.

(56) Documents cités:
- EP-A- 1 296 467
- US-A- 5 864 579
- US-A- 6 061 387
- PATENT ABSTRACTS OF JAPAN vol. 2000, no. 07, 29 septembre 2000 (2000-09-29) & JP 2000 101502 A (TOSHIBA CORP), 7 avril 2000 (2000-04-07)
- CHACHAG YI: "TDM framing for gap filler operation in satellite digital multimedia broadcasting system A" VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 5, 17 mai 2004 (2004-05-17), pages 2782-2786, XP010766756 ISBN: 0-7803-8255-2

## Description

L'invention concerne les réseaux de communication hybrides, et plus précisément la synchronisation des transmissions descendantes (ou « downlink ») au sein de tels réseaux.

On entend ici par « réseau de communication hybride » un réseau, ou au moins la partie d'un réseau, qui est chargé(e), notamment, de diffuser des données vers des terminaux d'utilisateurs, au moyen d'au moins un satellite de transmission, éventuellement de type géostationnaire, et d'émetteurs terrestres, implantés en des endroits connus.

Par ailleurs, on entend ici par « transmissions descendantes », les transmissions de signaux s'effectuant du réseau vers les terminaux des utilisateurs, via les émetteurs et/ou le satellite. Il est ici rappelé que dans un réseau hybride les émetteurs et le satellite reçoivent des données identiques (destinées aux terminaux des utilisateurs) issues d'un réseau de distribution de données qui peut se présenter sous toute(s) forme(s) (terrestre (filaire et/ou radio) et/ou satellitaire), et qu'ils doivent retransmettre par voie d'ondes ces données reçues vers des terminaux d'utilisateurs:

L'invention concerne notamment les réseaux hybrides mono-fréquence, c'est-à-dire ceux dans lesquels les signaux destinés aux terminaux des utilisateurs sont réémis par les émetteurs et par le satellite selon une même fréquence et une même forme d'onde, par exemple de type OFDM (pour « Orthogonal Frequency Division Multiplex ») ou CDMA (pour « Code Division Multiple Access »). L'invention s'applique plus généralement à tout type de réseau hybride dans lequel les données sont transmises (ou diffusées) par voie d'ondes sous la forme de symboles dont la longueur temporelle (ou durée) est petite par rapport à la dispersion des temps de transmission entre le satellite et les différents terminaux d'utilisateurs qui sont situés dans toute la zone de couverture dudit satellite.

Comme le sait l'homme de l'art, dans un réseau de diffusion mono-fréquence, qu'il soit terrestre ou hybride, les terminaux d'utilisateurs, destinataires des signaux radio, reçoivent fréquemment un même signal radio d'au moins deux sources différentes. Lorsque des signaux radio identiques parviennent avec un écart temporel au niveau d'un terminal, cela peut induire un phénomène de brouillage entre symboles potentiellement perturbateur.

Dans un réseau terrestre mono-fréquence, la forme d'onde utilisée tolère la présence d'écho(s) lorsque l'écart temporel est inférieur à un seuil, par exemple égal à l'intervalle de garde dans le cas d'une forme d'onde de type OFDM ou bien à la fenêtre de Rake du terminal dans le cas d'une forme d'onde de type WCDMA. Tant que cette condition est satisfaite, les signaux reçus contribuent ensemble positivement à la qualité de réception. En utilisant des distances entre émetteurs qui interdisent des écarts temporels entre trajets supérieurs au seuil, et en synchronisant les transmissions desdits émetteurs par rapport à une référence temporelle absolue, on peut obtenir une couverture continue qui permet de satisfaire la condition précitée.

Dans un réseau hybride mono-fréquence, une telle synchronisation des émetteurs n'est pas possible du fait de l'importance des écarts temporels entre les trajets suivis par un même signal radio retransmis par le satellite dans sa zone de couverture. Typiquement, l'écart temporel entre des trajets, suivis par un même signal radio entre deux villes espacées d'environ 1100 km (comme par exemple Perpignan et Boulogne, en France), est d'environ 3 ms, alors que le seuil est limité à environ une centaine de microsecondes (µs) dans le cas d'un signal OFDM de type DVB-H.

Pour remédier à cet inconvénient, il a été proposé d'utiliser des émetteurs de type transparent et équipés d'un récepteur satellite. Les émetteurs retransmettent alors les signaux radio qu'ils reçoivent du satellite et non plus les signaux qu'ils reçoivent du réseau de distribution. Les signaux retransmis par un émetteur sont donc synchronisés par rapport à ceux transmis par le satellite, au temps d'amplification local près. Cette solution nécessite d'isoler très fortement dans chaque émetteur la partie de réception satellitaire de la partie de réémission afin d'éviter les perturbations telles que les auto-oscillations. En outre, les signaux qui sont retransmis par les émetteurs ont été dégradés par le trajet satellite.

Le document D1 US-A-6 061 387 décrit la diffusion d'un signals audio dans un système de diffusion par satellite turbo-codé.

Ce document divulgue en outre un procédé de synchronisation de transmission de signaux d'utilisateurs pour un réseau hybride monofréquence comprenant au moins un satellite de transmission et des émetteurs agencés pour retransmettre des signaux d'utilisateurs reçus, selon une même fréquence et une même forme d'onde, vers des terminaux d'utilisateurs, caractérisé en ce qu'il consiste à décaler temporellement l'instant de retransmission des signaux d'utilisateurs reçus par chaque émetteur d'une durée locale ("adaptive propagation delay") fonction des positions respectives dudit émetteur et dudit satellite, de sorte que des mêmes signaux d'utilisateurs retransmis par ledit satellite et ledit émetteur parviennent sensiblement en même temps au niveau d'un terminal d'utilisateur.

Aucune solution connue n'apportant une entière satisfaction, l'invention a donc pour but d'améliorer la situation, et notamment de permettre une optimisation de la qualité des signaux radio reçus par les terminaux d'utilisateurs et/ou une souplesse de déploiement accrue du réseau hybride.

Elle propose à cet effet un procédé dédié à la synchronisation de la transmission de signaux d'utilisateurs au sein d'un réseau hybride mono-fréquence comprenant au moins un satellite de transmission et des émetteurs chargés de retransmettre vers des terminaux d'utilisateurs des signaux d'utilisateurs reçus selon une même fréquence et une même forme d'onde.

Ce procédé se caractérise par le fait qu'il consiste à décaler temporellement par rapport à un marqueur temporel, qui correspond à l'instant d'arrivée d'un élément choisi de signaux d'utilisateurs issus du satellite au niveau d'un arc terrestre de référence, l'instant de retransmission des signaux d'utilisateurs reçus par chaque émetteur d'une durée locale fonction des positions respectives de cet émetteur et du satellite par rapport à une position de référence choisie sur l'arc de référence, afin que des mêmes signaux d'utilisateurs retransmis par le satellite et l'émetteur parviennent sensiblement en même temps au niveau d'un terminal d'utilisateur.
- les signaux d'utilisateurs transmis à chaque émetteur (mais également à une station satellitaire) par un réseau de distribution sont précédés de signaux de signalisation contenant le marqueur temporel (correspondant à un élément choisi de signaux d'utilisateurs). Les signaux d'utilisateurs sont alors également transmis à une station satellitaire alimentée par le réseau de distribution et précédés de signaux de signalisation contenant le marqueur temporel. Dans ce cas, les signaux d'utilisateurs sont émis vers le satellite par la station satellitaire avec une avance par rapport au marqueur temporel qui est égale à la somme d'une première durée de transmission entre la station satellitaire et le satellite et d'une deuxième durée de transmission entre le satellite et l'arc de référence ;
   Le procédé selon l'invention peut comporter d'autres caractéristiques qui peuvent être prises séparément ou en combinaison, et notamment :
   ➢ chaque durée locale peut par exemple être fonction au moins de la différence entre la deuxième durée et une troisième durée égale au temps de transmission entre le satellite et l'émetteur concerné ;
      - on peut adapter dans la station satellitaire l'avance de transmission compte tenu de la dérive en cours du satellite par rapport à une position connue ;
      - chaque durée locale peut par exemple être prédéterminée pour chaque émetteur et appliquée localement de façon constante ;
      - on peut transmettre à chaque émetteur et à la station satellitaire des informations représentatives de la position du satellite et de la position de référence dans un référentiel terrestre choisi. Dans ce cas, on détermine dans chaque émetteur les deuxième et troisième durées afin de calculer la durée locale à utiliser ;
         ■ certaines des informations peuvent être des éphémérides du satellite ;
         ■ en variante, certaines des informations peuvent être représentatives de la dérive en cours du satellite par rapport à une position connue ;
      - on peut transmettre à chaque émetteur et à la station satellitaire des informations représentatives des première et deuxième durées. Dans ce cas, on détermine en chaque émetteur la troisième durée en fonction au moins de la variation de la deuxième durée afin de calculer la durée locale à utiliser ;
- les signaux d'utilisateurs peuvent être transmis à chaque émetteur par un réseau de distribution, et l'on peut transmettre au satellite, au moyen d'une station satellitaire les signaux d'utilisateurs précédés de signaux de signalisation contenant le marqueur temporel (correspondant à un élément choisi des signaux d'utilisateurs), afin que le satellite retransmette les signaux de signalisation avant les signaux d'utilisateurs. Dans ce cas, on détecte l'instant de réception de l'élément choisi des signaux d'utilisateurs dans chaque émetteur, puis on détermine la durée locale, à utiliser pour la retransmission des signaux d'utilisateurs suivants, en soustrayant l'instant de réception de la valeur du marqueur temporel qui est contenu dans les signaux de signalisation reçus ;
   ➢ les signaux de signalisation retransmis par le satellite (et par les émetteurs terrestres) peuvent contenir des informations représentatives de la position du satellite (certaines des informations peuvent être des éphémérides du satellite, ou représentatives de la dérive en cours du satellite par rapport à une position connue). Dans ce cas, on adapte la durée locale au niveau de chaque émetteur en fonction de la position du satellite.

L'invention est particulièrement bien adaptée, bien que de façon non exclusive, aux réseaux hybrides à forme d'onde de type OFDM ou CDMA. Mais, d'une manière générale l'invention s'applique à tout type de réseau dans lequel les données sont transmises par voie d'ondes sous la forme de symboles dont la longueur temporelle (ou durée) est petite par rapport à la dispersion des temps de transmission entre le satellite et les différents terminaux d'utilisateurs situés dans toute sa zone de couverture.

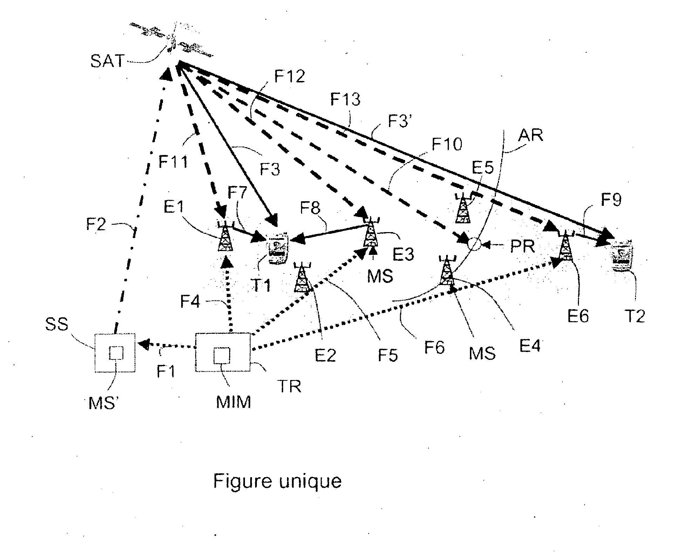

D'autres caractéristiques et avantages de l'invention apparaîtront à l'examen de la description détaillée ci-après, et du dessin annexé, sur lequel l'unique figure illustre de façon très schématique un réseau de diffusion hybride mono-fréquence permettant de mettre en oeuvre l'invention. Le dessin annexé pourra non seulement servir à compléter l'invention, mais aussi contribuer à sa définition, le cas échéant.

L'invention a pour objet de permettre l'optimisation de la réception par des terminaux d'utilisateurs de signaux retransmis par un satellite et par des émetteurs terrestres d'un réseau de diffusion hybride.

Dans ce qui suit, on considère à titre d'exemple non limitatif que le réseau de diffusion hybride est mono-fréquence et de type OFDM. Mais, l'invention s'applique à tout type de réseau de communication dans lequel les données sont transmises par voie d'ondes sous la forme de symboles dont la longueur temporelle est petite par rapport à la dispersion des temps de transmission entre le satellite et les différents terminaux d'utilisateurs situés dans toute sa zone de couverture, et notamment aux réseaux de type CDMA (par exemple WCDMA).

L'invention concernant la synchronisation des équipements du réseau de diffusion (ou de communication) qui interviennent dans la retransmission de signaux vers des terminaux d'utilisateurs, on ne décrira pas ci-après, en détail, les moyens utilisés pour alimenter ces équipements de réseau en signaux.

Comme cela est schématiquement illustré sur l'unique figure, le réseau de diffusion (ou de communication) comprend au moins une tête de réseau TR, au moins une station satellitaire SS (éventuellement colocalisée avec la tête de réseau TR), au moins un satellite SAT, éventuellement géostationnaire, et des émetteurs terrestres Ei (ici i = 1 à 6, mais il peut prendre n'importe quelle valeur supérieure ou égale à deux (2)).

La tête de réseau TR est l'équipement de réseau qui reçoit du réseau de contribution les données d'utilisateurs qui doivent être retransmises aux terminaux d'utilisateurs Tj (ici j = 1 et 2, mais il peut prendre n'importe quelle valeur supérieure ou égale à un (1)) qui sont situés dans la zone de couverture du réseau de diffusion.

On entend ici par « zone de couverture du réseau de diffusion » l'espace à l'intérieur duquel des terminaux d'utilisateurs Tj peuvent recevoir des signaux radio, dits signaux d'utilisateurs du fait qu'ils contiennent des données d'utilisateurs.

Par ailleurs, on entend ici par « terminal d'utilisateur » tout équipement de communication capable au moins de recevoir des signaux radio provenant du satellite SAT et des émetteurs Ei et présentant une même forme d'onde et une même fréquence. Il pourra donc s'agir, par exemple, d'un téléphone mobile, d'un assistant numérique personnel (ou PDA), d'un ordinateur fixe ou portable, d'un téléviseur, d'un boîtier de réception (et éventuellement d'enregistrement) de programmes (éventuellement cryptés), par exemple de type baladeur numérique ou console de jeux, d'un récepteur radio, portable ou embarqué dans un véhicule de transport individuel ou collectif, ou d'un serveur, disposant de moyens de réception radio appropriés.

La station satellitaire SS est alimentée en données d'utilisateurs et données de signalisation par la tête de réseau TR via un réseau de distribution (flèche F1). Elle est chargée de transmettre par voie d'ondes au satellite SAT (flèche F2) les données d'utilisateurs (sous la forme de signaux d'utilisateurs) et, dans certaines réalisations, certaines données de signalisation ou de contrôle (sous la forme de signaux de signalisation). Il est important de noter que la station satellitaire SS peut être alimentée en données d'utilisateurs et données de signalisation par un ou plusieurs réseaux de distribution terrestre(s) (radio et/ou filaires) et/ou satellitaire(s).

Le satellite SAT est chargé de retransmettre (ou diffuser) vers les terminaux d'utilisateurs Tj, qui sont situés dans sa zone de couverture, les données d'utilisateurs et certaines données de signalisation ou de contrôle qu'il reçoit de la station satellitaire SS, respectivement sous la forme de signaux d'utilisateurs et de signaux de signalisation (flèches F3 et F3'). On considère dans ce qui suit, à titre d'exemple illustratif et non limitatif que le satellite SAT est de type géostationnaire. Mais, cela n'est pas obligatoire.

Il est important de noter que les signaux de signalisation peuvent être, ou ne pas être, dissociés des signaux d'utilisateurs. Plus précisément, les données de signalisation qui se rapportent à des données d'utilisateurs peuvent être intégrées dans le signal d'utilisateur qui comprend les données d'utilisateur précédentes.

Les émetteurs terrestres Ei sont de type régénératif. Ils sont également alimentés en données d'utilisateurs et données de signalisation par la tête de réseau TR via un réseau de distribution (flèches F4 à F6). Ils sont chargés de retransmettre par voie d'ondes aux terminaux d'utilisateurs Tj (flèches F7 à F9), qui sont situés dans leurs zones de couverture respectives, les données d'utilisateurs et, dans certaines réalisations, certaines données de signalisation ou de contrôle qu'ils reçoivent de la station satellitaire SS, respectivement sous la forme de signaux d'utilisateurs et de signaux de signalisation. Il est important de noter que les émetteurs Ei peuvent être alimentés en données d'utilisateurs et données de signalisation par un ou plusieurs réseaux de distribution terrestre(s) (radio et/ou filaires) et/ou satellitaire(s).

Par ailleurs, chaque émetteur terrestre Ei comporte un module de synchronisation MS qui se présente par exemple sous la forme de ce que l'homme de l'art appelle un SYNC System (« Synchronisation System ») perfectionné, piloté par une horloge, par exemple de type GPS. De même, la station satellitaire SS comporte un module de synchronisation MS' qui se présente par exemple sous la forme d'un SYNC System perfectionné, piloté par une horloge, par exemple de type GPS.

Le satellite SAT et les émetteurs Ei retransmettent ici les signaux d'utilisateurs et les éventuels signaux de signalisation selon une même fréquence et une même forme d'onde choisie, par exemple OFDM ou CDMA, du fait que le réseau de diffusion est mono-fréquence.

L'invention propose de décaler temporellement, d'une durée locale DLi choisie par rapport à un marqueur temporel MT (correspondant à un élément choisi de signaux d'utilisateurs), l'instant de retransmission desdits signaux d'utilisateurs qui sont reçus par chaque émetteur Ei.

On entend ici par « marqueur temporel » MT une information représentative d'un horaire de diffusion d'un élément choisi (et précis) de signaux d'utilisateurs. Ce marqueur temporel MT définit l'instant d'arrivée au niveau d'un arc terrestre de référence AR d'un élément choisi de signaux d'utilisateurs retransmis par le satellite SAT. Il est déterminé par le réseau en fonction d'une position de référence du satellite SAT et de la position de l'arc de référence AR dans la zone de couverture du réseau. Ces positions sont définies par rapport à un référentiel fixe, de préférence rattaché à la terre. Les marqueurs temporels MT sont transmis de façon récurrente, de préférence toujours en correspondance d'un même élément choisi des signaux d'utilisateurs, comme par exemple le début d'un premier paquet ou bien le premier symbole d'un ensemble de symboles.

A chaque émetteur Ei correspond une durée locale DLi représentative du décalage temporel qu'il doit appliquer lors de la retransmission (ou réémission) d'un signal d'utilisateur. Cette durée locale DLi peut être positive (avance) ou négative (retard).

Chaque durée locale DLi (qui fixe chaque instant de retransmission) est fonction des positions respectives de l'émetteur concerné Ei et de la position de référence PR choisie sur l'arc de référence AR. Par ailleurs, chaque durée locale DLi est déterminée de sorte que des mêmes signaux d'utilisateurs retransmis (ou réémis) par le satellite SAT et par l'émetteur concerné Ei parviennent sensiblement en même temps au niveau d'un terminal d'utilisateur Tj. On entend ici par « sensiblement en même temps » une quasi simultanéité à plus ou moins quelques dizaines de microsecondes (typiquement 10 à 50 µs), et dans la majorité des cas inférieure à l'intervalle (ou fenêtre) de garde de la forme d'onde du signal retransmis.

L'invention peut être mise en oeuvre de différentes manières, selon la méthode utilisée pour déterminer la durée locale DLi.

Une première manière consiste à transmettre à chaque émetteur Ei (ainsi qu'à la station satellitaire SS) un signal de signalisation contenant le marqueur temporel MT (correspondant à un élément choisi de signaux d'utilisateurs), avant de lui transmettre (ainsi qu'à la station satellitaire SS) lesdits signaux d'utilisateurs à retransmettre, qui correspondent à ce marqueur temporel MT. Cette transmission est effectuée par la tête de réseau TR via le(s) réseau(x) de distribution. Plus précisément, la tête de réseau TR comprend par exemple un module de contrôle MIM chargé de déterminer chaque marqueur temporel MT associé à l'élément choisi des signaux d'utilisateurs à retransmettre. Ce module de contrôle MIM est par exemple réalisé sous la forme d'un module perfectionné d'insertion de paquets d'information de trame (ou MIP inserter pour « Megaframe Information Packet inserter »), du type de ceux utilisés dans les réseaux terrestres mono-fréquence.

Chaque fois que le module de synchronisation MS d'un émetteur Ei reçoit un marqueur temporel MT (correspondant à un élément choisi de signaux d'utilisateurs), il cale la retransmission des signaux d'utilisateurs correspondants par rapport audit marqueur temporel MT, compte tenu de la durée locale DLi qui correspond à son émetteur Ei.

De son côté, le module de synchronisation MS' de la station satellitaire SS cale la transmission des signaux d'utilisateurs vers le satellite SAT de sorte que lesdits signaux d'utilisateurs puissent parvenir au niveau de l'arc de référence AR à l'instant défini par le marqueur temporel MT correspondant. En d'autres termes, la station satellitaire SS transmet les signaux d'utilisateurs au satellite SAT avec une avance par rapport au marqueur temporel MT qui est égale à la somme d'une première durée de transmission DT entre la station satellitaire SS et le satellite SAT et d'une deuxième durée de transmission DR entre le satellite SAT et l'arc de référence AR. La première durée DT correspond au trajet matérialisé par la flèche F2, tandis que la deuxième durée DR correspond au trajet matérialisé par la flèche F10.

Par exemple, chaque durée locale DLi est fonction au moins de la différence entre la deuxième durée DR et une troisième durée DSEi qui est égale au temps de transmission entre le satellite SAT et l'émetteur concerné Ei. Autrement dit, DLi = DR - DSEi. Par exemple, la troisième durée DSE1 correspond au trajet entre le satellite SAT et le premier émetteur E1, matérialisé par la flèche F11, la troisième durée DSE3 correspond au trajet entre le satellite SAT et le troisième émetteur E3, matérialisé par la flèche F12, et la troisième durée DSE6 correspond au trajet entre le satellite SAT et le sixième émetteur E6, matérialisé par la flèche F13. On a alors pour ces trois exemples : DL1 = DR - DSE1, DL3 = DR- DSE3 et DL6 = DR - DSE6.

L'avance de transmission des signaux d'utilisateurs au niveau de la station satellitaire SS est déterminée en fonction de la connaissance des positions respectives du satellite SAT et de l'arc de référence AR par rapport au référentiel choisi.

Elle peut être considérée comme fixe, et donc constante, lorsque l'on considère en première approximation que le satellite SAT est parfaitement immobile par rapport à une position de référence connue.

Dans ce cas, toutes les première DT, deuxième DR et troisièmes DSEi durées sont considérées comme constantes. Par conséquent, chaque durée locale DLi est également constante et peut être prédéterminée pour chaque émetteur Ei et appliquée localement de façon constante. Dès qu'un émetteur Ei reçoit un signal de signalisation comportant un marqueur temporel MT (correspondant à un élément choisi de signaux d'utilisateurs), son module de synchronisation MS cale sa retransmission par rapport à ce marqueur temporel MT en soustrayant de ce dernier la durée locale DLi (positive ou négative) prédéterminée. L'instant de retransmission ti d'un signal d'utilisateurs est alors défini comme suit : ti = MT - DLi.

Dans l'exemple illustré sur l'unique figure, le trajet entre le satellite SAT et le premier émetteur E1 étant moins long que le trajet entre le satellite SAT et la position de référence PR sur l'arc de référence AR, par conséquent on a DSEi < DR et donc DLi > 0. L'instant de retransmission t1 de l'élément choisi de signaux d'utilisateurs par l'émetteur E1 est alors en avance sur le marqueur temporel MT (t1 < MT). En revanche, dans cet exemple le trajet entre le satellite SAT et le sixième émetteur E6 étant plus long que le trajet entre le satellite SAT et la position de référence PR sur l'arc de référence AR, par conséquent on a DSEi > DR et donc DLi < 0. L'instant de retransmission t6 de l'élément choisi de signaux d'utilisateurs par l'émetteur E6 est alors en retard sur le marqueur temporel MT (t6 > MT).

Mais, dans une variante l'avance de transmission des signaux d'utilisateurs au niveau de la station satellitaire SS peut être considérée comme variable lorsque l'on considère que le satellite SAT fait l'objet d'une dérive lente par rapport à une position de référence, ce qui est généralement le cas. Cette dérive entraîne non seulement une variation de la première durée DT, mais également des deuxième DR et troisièmes DSEi durées ainsi qu'éventuellement de l'arc matérialisant l'intersection du signal avec la surface de la terre. Il est rappelé que l'on considère habituellement qu'un satellite géostationnaire se déplace à l'intérieur d'un cube d'environ 10 km de côté, ce qui peut induire une variation maximale de la somme des première DT et deuxième DR durées (trajet montant-descendant via le satellite SAT) d'environ 20 µs.

Dans ce cas, le module de synchronisation MS' de la station satellitaire SS peut adapter l'avance de transmission compte tenu de la dérive en cours du satellite SAT par rapport à sa position de référence connue. La définition de la dérive peut par exemple être communiquée à la station satellitaire SS par le module de contrôle MIM de la tête de réseau TR. En variante, le module de contrôle MIM de la tête de réseau TR peut par exemple transmettre les éphémérides du satellite SAT à la station satellitaire SS via le(s) réseau(x) de distribution afin que son module de synchronisation MS' puisse déterminer l'avance à appliquer.

Il est important de noter que pour tenir compte de la dérive du satellite SAT, on peut adapter la durée locale DLi du décalage de retransmission au niveau de chaque émetteur Ei au lieu de faire varier l'avance de transmission des signaux d'utilisateurs au niveau de la station satellitaire SS.

Dans ce cas, on peut par exemple transmettre à chaque émetteur Ei et à la station satellitaire SS des informations représentatives de la position du satellite SAT et de la position de référence PR dans le référentiel terrestre choisi. Cette transmission est par exemple effectuée par le module de contrôle MIM de la tête de réseau TR, via le(s) réseau(x) de distribution, au moyen d'un signal de signalisation. Certaines des informations peuvent par exemple représenter les éphémérides du satellite SAT ou bien la dérive en cours du satellite SAT par rapport à une position de référence.

A réception de ces informations, le module de synchronisation MS de chaque émetteur Ei détermine tout d'abord les valeurs des deuxième DR et troisième DSEi durées compte tenu de la position en cours du satellite SAT (ou ce qui revient au même de sa dérive en cours). Puis, il calcule la durée locale DLi (DLi = DR - DSEi) à utiliser pour caler l'instant ti de retransmission de son émetteur Ei (ti = MT - DLi).

En variante, au lieu de transmettre les éphémérides ou la dérive du satellite SAT, on peut transmettre à chaque émetteur Ei et à la station satellitaire SS des informations représentatives des première DT et deuxième DR durées en cours (fonction de la position réelle en cours du satellite SAT). Cette transmission est par exemple effectuée par le module de contrôle MIM de la tête de réseau TR. via le(s) réseau(x) de distribution, au moyen d'un signal de signalisation. Dans ce cas, le module de synchronisation MS de chaque émetteur Ei détermine tout d'abord la valeur de la troisième durée DSEi en fonction au moins de la variation de la deuxième durée DR reçue. Puis, il calcule la durée locale DLi (DLi = DR - DSEi) à utiliser pour caler l'instant ti de retransmission de son émetteur Ei (ti = MT - DLi).

Une seconde manière consiste à transmettre au satellite SAT (ainsi qu'aux émetteurs Ei), au moyen de la station satellitaire SS, un signal de signalisation contenant le marqueur temporel MT (correspondant à un élément choisi de signaux d'utilisateurs), avant de lui transmettre les signaux d'utilisateurs correspondants à retransmettre. Ce marqueur temporel MT est par exemple préalablement transmis par le module de contrôle MIM de la tête de réseau TR à la station satellitaire SS, via le(s) réseau(x) de distribution. Le satellite SAT est alors chargé d'émettre le signal de signalisation afin qu'il parvienne au niveau des émetteurs Ei par le trajet satellite. Comme indiqué précédemment, le satellite SAT peut transmettre les données de signalisation qui se rapportent à des données d'utilisateurs soit sous la forme d'un signal de signalisation dissocié du, et précédent le, signal d'utilisateur qui comprend lesdites données d'utilisateurs, soit intégrées dans le signal d'utilisateur qui comprend les données d'utilisateur précédentes.

Il faut pour ce faire que chaque émetteur Ei dispose d'un récepteur capable de recevoir les signaux de signalisation et les signaux d'utilisateurs transmis par le satellite SAT (de préférence bien isolé de son dispositif de retransmission de signaux).

Ainsi, chaque fois qu'un émetteur Ei reçoit avec son récepteur satellitaire un signal de signalisation contenant un marqueur temporel MT (issu du satellite SAT et correspondant à un élément choisi de signaux d'utilisateurs), son module de synchronisation MS, date (ou détecte) l'instant de réception tri de cet élément choisi de signaux d'utilisateurs. Cette datation se fait par rapport à l'horloge de l'émetteur Ei. Puis, le module de synchronisation MS détermine la durée locale DLi à utiliser localement en soustrayant l'instant de réception tri de l'instant désigné par le marqueur temporel MT (DLi = MT - tri). Il n'a plus alors qu'à caler l'instant ti de retransmission de son émetteur Ei par rapport au marqueur temporel MT reçu, compte tenu de la durée locale DLi déterminée (ti = MT - DLi). Cela impose que l'on satisfasse à la condition DLi > ti - tri, ou dit autrement que le temps séparant l'instant de retransmission ti d'un signal d'utilisateurs de l'instant de réception tri d'un signal de signalisation soit assez grand, et notamment strictement plus grand que la durée locale DLi.

Ce qui précède correspond à une situation dans laquelle on considère en première approximation que le satellite SAT est parfaitement immobile par rapport à sa position de référence. Mais, on peut également considérer que le satellite SAT n'est pas immobile par rapport à sa position de référence. Dans ce cas, le marqueur temporel MT ne correspond plus à l'instant d'arrivée d'un élément choisi de signaux d'utilisateurs satellitaires au niveau de la position de référence PR sur l'arc de référence AR. En d'autres termes, on est en présence d'un point de référence mobile PRM, et la valeur DLi mesurée varie en conséquence (il n'est alors pas nécessaire de connaître la position du point de référence mobile PRM car le procédé mis en oeuvre repose sur la différence des trajets). Chaque fois qu'un émetteur Ei reçoit avec son récepteur satellitaire un signal de signalisation contenant un marqueur temporel MT et l'élément choisi correspondant de signaux d'utilisateurs (issus du satellite SAT), son module de synchronisation MS, détermine l'adaptation qu'il doit apporter à la durée locale DLi compte tenu de l'écart reçu. Il n'a plus alors qu'à caler l'instant ti de retransmission de son émetteur Ei par rapport au marqueur temporel MT reçu, compte tenu de la durée locale DLi adaptée (ti = MT - DLi).

Les modules de synchronisation MS et MS', respectivement des émetteurs Ei et de la station satellitaire SS, peuvent être réalisés sous la forme de circuits électroniques, de modules logiciels (ou informatiques), ou d'une combinaison de circuits et de logiciels.

L'invention ne se limite pas aux modes de réalisation de procédé de synchronisation de transmission, d'émetteur régénératif, de station satellitaire et de tête de réseau décrits ci-avant, seulement à titre d'exemple, mais elle englobe toutes les variantes que pourra envisager l'homme de l'art dans le cadre des revendications ci-après.

## Revendications

1. Procédé de synchronisation de transmission de signaux d'utilisateurs pour un réseau hybride mono-fréquence comprenait au moins un satellite de transmission (SAT), un réseau de distribution, une station satellitaire et des émetteurs terrestres régéneratifs (Ei) agencés pour retransmettre des signaux d'utilisateurs reçus, selon une même fréquence et une même forme d'onde, vers des terminaux d'utilisateurs (Ti), **caractérisé en ce qu'**il consiste à décaler temporellement par rapport à un marqueur temporel (MT), correspondait à l'instant d'arrivée d'un élément choisi de signaux d'utilisateurs issus dudit satellite (SAT) au niveau d'un arc terrestre de référence (AR), l'instant de retransmission des signaux d'utilisateurs reçus par chaque émetteur (Ei) d'une durée locale (DLi) fonction des positions respectives dudit émetteur (Ei) et dudit satellite (SAT) par rapport à une position de référence (PR) choisie sur ledit arc (AR), due sorte que des mêmes signaux d'utilisateurs retransmis par redit satellite (SAT) et ledit émetteur (Ei) parviennent sensiblement en même temps au niveau d'un terminal d'utilisateur (Tj),
**en ce que** lesdits signaux d'utilisateurs transmis à chaque émetteur (Ei) par un réseau de distribution sont précédés de signaux de signalisation contenant ledit marqueur temporel (MT), **en ce que** lesdits signaux d'utilisateurs sont transmis à une station satellitaire (SS) alimentée par ledit réseau de distribution, précédés de signaux de signalisation contenant ledit marqueur temporel (MT), et **en ce que** lesdits signaux d'utilisateurs sont transmis audit satellite (SAT) par ladite station satellitaire (SS) une avance par rapport audit marqueur temporel (MT) égale à la somme d'une première durée de transmission (DT) entre ladite station satellitaire (SS) et ledit satellite (SAT) et d'une deuxième durée de transmission (DR) entre ledit satellite (SAT) et ledit arc (AR),
on ce que chaque durée locale (DLi) est fonction au moins d'une différence entre ladite deuxième durée (DR) et une troisième durée (DSEi) égale au temps de transmission entre ledit satellite (SAT) et l'émetteur concerné (Ei).

2. Procédé selon la revendication 1, **caractérisé en ce que** l'on adapte ladite avance dans ladite station satellitaire (SS) compte tenu d'une dérive en cours dudit satellite (SAT) par rapport à une position connue.

3. Procédé selon l'une des revendications 1 et 2, **caractérise en ce que** chaque durée locale (DLi) est prédéterminée pour chaque émetteur (Ei) et appliquée localement de façon constant.

4. Procédé selon la revendication 1, **caractérisé en ce que** l'on transmet à chaque émetteur (Ei) et à ladite station satellitaire (SS) des informatisons représentatives de ladite position du satellite (SAT) et de ladite position de référence (PR) dans un référentiel terrestre choisi, et **en ce que** l'on détermine dans chaque émetteur (Ei) lesdites seconde (DR) et troisième (DSEi) durées afin de calculer ladite durée locale (DLi) à utiliser.

5. Procédé selon la revendication 1, **caractérisé en ce que** l'on transmet à chaque émetteur (Ei) et à ladite station satellitaire (SS) des informations représentatives, desdites première (DT) et deuxième (DR) durées, et **en ce que** l'on détermine dans chaque émetteur (Ei) ladite troisième durée (DSEi) en fonction au moins d'une variation de ladite deuxième durée (DR) afin de calculer ladite durée locale (DLi) à, utiliser.

6. Procédé selon la revendication 1, **caractérisé en ce que** lesdits signaux d'utilisateurs sont transmis à chaque émetteur (Ei) précédés de signaux de signalisation contenant ledit marqueur temporel (MT) par un réseau de distribution, **en ce que** l'on transmet audit satellite (SAT),au moyen d'une station satellitaire (SS) dudit réseau de distribution, lesdits signaux d'utilisateurs précédés de signaux de signalisation contenant ledit marqueur temporel (MT), de sorte que ledit satellite (SAT) retransmettre lesdits signaux de signalisation avant lesdits signaux d'utilisateurs, et **en ce que** l'on détecte l'instant (tri) de réception de l'élément choisi de signaux d'utilisateurs dans chaque émetteur (Ei), puis on détermine ladite durée locale (DLi) à utiliser pour retransmettre les signaux d'utilisateurs suivants en soustrayant ledit instant de réception (tri) dudit marqueur temporel (MT) contenu dans lesdits signaux de signalisation reçus.

7. Procédé selon là revendication 6, **caractérisé en ce que** lesdits signaux de signalisation retransmis par ledit satellite (SAT) contiennent des informations représentatives de ladite position du satellite (SAT), et **en ce que** l'on adapte ladite durée locale (DU) au niveau de chaque émetteur (Ei) en fonction de ladite position du satellite (SAT).

8. Procédé selon l'une des revendications 4 et 7, **caractérisé en ce que** certaines desdits informations sont des éphémérides dudit satellite (SAT),

9. Procédé selon l'une des revendications 4 et 7, **caractérisé en ce que** certaines desdites informations sont représentatives d'une dérive en cours dudit satellite (SAT) par rapport à une position connue.

10. Réseau hybride mono-fréquence comprenant un satellite de transmission (SAT), un réseau de distribution, une station satellitaire et des émetteurs terrestres régénératifs (Ei) agencés pour retransmettre vers des terminaux d'utilisateurs (Tj) des signaux d'utilisateurs reçus, selon une même fréquence et une même forme d'onde, et une station satellitaire (SS) agencée pour transmettre audit satellite (SAT) lesdits signaux d'utilisateurs à retransmette, **caractérisé en ce que** lesdits émetteurs (Ei) et ladite station satellitaire (SS) sont propres à mettre en oeuvre un procédé selon l'une des revendications précédentes.

## Claims

1. Synchronisation method for the transmission of user signals for a single frequency hybrid network including at least one transmission satellite (SAT), a distribution network, a satellite station and regenerative terrestrial transmitters (Ei) arranged to retransmit the user signals received based on a single frequency and a single waveform, to user terminals (Tj), **characterised in that** it involves temporal offsetting in relation to a timing marker (MT), corresponding to the time of arrival of a chosen element of user signals coming from said satellite (SAT) at a reference terrestrial arc (AR), of the time of retransmission of the user signals received by each transmitter (Ei) of a local duration (DLi) dependent upon the respective positions of said transmitter (Ei) and said satellite (SAT) in relation to a reference position (PR) chosen on said arc (AR), such that the same user signals retransmitted by said satellite (SAT) and said transmitter (Ei) reach a user terminal (Tj) at roughly the same time,
and **in that** said user signals sent to each transmitter (Ei) by a distribution network are preceded by signalling signals containing said timing marker (MT), and **in that** said user signals are sent to a satellite station (SS) powered by said distribution network, preceded by signalling signals containing said timing marker (MT), and **in that** said user signals are sent to said satellite (SAT) by said satellite station (SS) in advance in relation to said timing marker (MT), equal to the sum of a first transmission duration (DT) between said satellite station (SS) and said satellite (SAT) and a second transmission duration (DR) between said satellite (SAT) and said arc (AR),
**in that** each local duration (DLi) depends upon at least one difference between said second duration (DR) and a third duration (DSEi) equal to the transmission time between said satellite (SAT) and the transmitter concerned (Ei).

2. Method according to claim 1, **characterised in that** said advance is adopted in said satellite station (SS) bearing in mind a drift in progress for said satellite (SAT) in relation to a known position.

3. Method according to one of claims 1 and 2, **characterised in that** each local duration (DLi) is pre-determined for each transmitter (Ei) and applied locally in a constant manner.

4. Method according to claim 1, **characterised in that** each transmitter (Ei) and each satellite station (SS) is sent information representative of said position of the satellite (SAT) and of said reference position (PR) in a chosen terrestrial reference system, and **in that** said second (DR) and third (DSEi) durations are determined in each transmitter (Ei) in order to calculate said local duration (DLi) to be used.

5. Method according to claim 1, **characterised in that** each transmitter (Ei) and said satellite station (SS) are sent information representative of said first (DT) and second (DR) durations, and **in that** in each transmitter (Ei), said third duration (DSEi) is determined based on at least one variation of said second duration (DR) in order to calculate said local duration (DLi) to be used.

6. Method according to claim 1, **characterised in that** said user signals are sent to each transmitter (Ei) preceded by signalling signals containing said timing marker (MT) by a distribution network, and **in that** said satellite (SAT) is sent, via a satellite station (SS) of said distribution network, said user signals preceded by signalling signals containing said timing marker (MT), such that said satellite (SAT) resends said signalling signals before said user signals, and **in that** the time (tri) the chosen element of user signals is received in each transmitter (Ei) is detected, then said local duration (DLi) to be used to resend the following user signals is determined by subtracting said time of reception (tri) from said timing marker (MT) contained in said signalling signals received.

7. Method according to claim 6, **characterised in that** said signalling signals resent by said satellite (SAT) contain information representative of said position of the satellite (SAT), and **in that** said local duration (DLi) is adapted to the level of each transmitter (Ei) based on said position of the satellite (SAT).

8. Method according to one of claims 4 and 7, **characterised in that** some of said information are the ephemerides of said satellite (SAT).

9. Method according to one of claims 4 and 7, **characterised in that** some of said information is representative of a drift in progress for said satellite (SAT) in relation to a known position.

10. Single frequency hybrid network including a transmission satellite (SAT), a distribution network, a satellite station and regenerative terrestrial transmitters (Ei) arranged to resend to user terminals (Tj) user signals received, based on a single frequency and a single waveform, and a satellite station (SS) arranged to send to said satellite (SAT) said user signals to be resent, **characterised in that** said transmitters (Ei) and said satellite station (SS) are able to implement a method according to one of the previous claims.

## Patentansprüche

1. Verfahren zur Synchronisation der Übertragung von Benutzersignalen für ein hybrides monofrequentes Netzwerk mit mindestens einem Übertragungssatelliten (SAT), einem Verteilernetzwerk, einer satellitengestützten Station und regenerativen terrestrischen Sendern (Ei), die dazu ausgelegt sind, empfangene Benutzersignale gemäß einer selben Frequenz und einer selben Wellenform an Benutzerendgeräte (Tj) weiterzuleiten, **dadurch gekennzeichnet, dass** es darin besteht, den Zeitpunkt der Übertragung der von jedem Sender (Ei) empfangenen Benutzersignale einer lokalen Dauer (DLi), welche von den jeweiligen Positionen des besagten Senders (Ei) und des besagten Satelliten (SAT) im Verhältnis zu einer auf einem terrestrischen Referenzbogen (AR) ausgewählten Referenzposition (PR) derart zeitlich im Verhältnis zu einem Zeitstempel (MT), welcher dem Zeitpunkt der Ankunft eines ausgewählten Elements von von dem besagten Satelliten (SAT) ausgegebenen Benutzersignale auf der Ebene des besagten Bogens (AR) entspricht, derart zu verschieben, dass dieselben Benutzersignale, die von dem besagten Satelliten (SAT) und dem besagten Sender (Ei) weitergeleitet werden, annähernd gleichzeitig auf einem Benutzerendgerät (Tj) empfangen werden,
dass den besagten an jeden Sender (Ei) über ein Verteilernetz übertragenen Benutzersignalen Signalisierungssignale vorausgehen, welche den besagten Zeitstempel (MT) enthalten, dass die besagten Benutzersignale, welchen Signalisierungssignale, die den besagten Zeitstempel (MT) enthalten, vorausgehen, an eine von dem besagten Verteilernetzwerk versorgte satellitengestützte Station (SS) übertragen werden, und dass die besagten Benutzersignale (MT) vorzeitig im Verhältnis zu dem besagten Zeitstempel (MT) von der besagten satellitengestützten Station (SS) an den besagten Satelliten (SAT) übertragen werden, wobei die Vorauszeit der Summe einer ersten Übertragungsdauer (DT) zwischen der besagten satellitengestützten Station (SS) und dem besagten Satelliten (SAT) und einer zweiten Übertragungsdauer (DR) zwischen dem besagten Satelliten (SAT) und dem besagten Bogen (AR) entspricht,
dass jede lokale Dauer (DLi) mindestens von einer Differenz zwischen der besagten zweiten Dauer (DR) und einer dritten Dauer (DSEi), welche der Übertragungszeit zwischen dem besagten Satelliten (SAT) und dem betroffenen Sender (Ei) entspricht, abhängt.

2. Verfahren nach Anspruch 1, **dadurch gekennzeichnet, dass** man die besagte Vorauszeit in der besagten satellitengestützten Station (SS) unter Berücksichtigung einer momentanen Verschiebung des besagten Satelliten (SAT) im Verhältnis zu einer bekannten Position anpasst.

3. Verfahren nach einem der Ansprüche 1 und 2, **dadurch gekennzeichnet, dass** jede lokale Dauer (DLi) für jeden Sender (Ei) vorgegeben ist und lokal konstant angewendet wird.

4. Verfahren nach Anspruch 1, **dadurch gekennzeichnet, dass** man an jeden Sender (Ei) und an die besagte satellitengestützte Station (SS) Informationen, die für die besagte Position des Satelliten (SAT) und die besagte Referenzposition (PR) in einem ausgewählten terrestrischen Bezugssystem repräsentativ sind, überträgt, und dass man in jedem Sender (Ei) die besagte zweite (SR) und die besagte dritte (DSEi) Dauer bestimmt, um die besagte zu verwendende lokale Dauer (DLi) zu berechnen.

5. Verfahren nach Anspruch 1, **dadurch gekennzeichnet, dass** man an jeden Sender (Ei) und an die besagte satellitengestützte Station (SS) Informationen überträgt, welche für die besagte erste (DT) und die besagte zweite (DR) Dauer repräsentativ sind, und dass man in jedem Sender (Ei) die besagte dritte Dauer (DSEi) gemäß mindestens einer Variation der besagten zweiten Dauer (DR) bestimmt, um die besagte zu verwendende lokale Dauer (DLi) zu bestimmen.

6. Verfahren nach Anspruch 1, **dadurch gekennzeichnet, dass** den besagten Benutzersignalen, die von einem Verteilernetzwerk an jeden Sender (Ei) übertragen werden, Signalisierungssignale vorausgehen, welche den besagten Zeitstempel (MT) enthalten, dass man die besagten Benutzersignale, welchen Signalisierungssignale mit dem besagten Zeitstempel (MT) vorausgehen, über eine satellitengestützte Station (SS) des besagten Verteilernetzwerks an den besagten Satelliten (SAT) überträgt, so dass der besagte Satellit (SAT) die besagten Signalisierungssignale aus den besagten Benutzersignalen weiterleitet, und dass man den Zeitpunkt (tri) des Empfangs des ausgewählten Elements der Benutzersignale an jedem Empfänger (Ei) feststellt und anschließend die besagte lokale Dauer (DLi), die für das Weiterleiten der nächsten Benutzersignale zu verwenden ist, bestimmt, indem man den besagten Zeitpunkt (tri) des Empfangs von dem besagten in den besagten empfangenen Signalisierungssignalen enthaltenen Zeitstempel (MT) abzieht.

7. Verfahren nach Anspruch 6, **dadurch gekennzeichnet, dass** die besagten von dem besagten Satelliten weitergeleiteten Signalisierungssignale Informationen enthalten, welche für die besagte Position des Satelliten (SAT) repräsentativ sind, und dass man die besagte lokale Dauer (DLi) auf der Ebene eines jeden Senders (Ei) gemäß der besagten Position des Satelliten (SAT) anpasst.

8. Verfahren nach einem der Ansprüche 4 und 7, **dadurch gekennzeichnet, dass** bestimmte der besagten Informationen Ephemeriden des besagten Satelliten (SAT) sind.

9. Verfahren nach einem der Ansprüche 4 und 7, **dadurch gekennzeichnet, dass** bestimmte der besagten Informationen für eine momentane Verschiebung des besagten Satelliten (SAT) im Verhältnis zu einer bekannten Position repräsentativ sind.

10. Hybrides monofrequentes Netzwerk mit einem Übertragungssatelliten (SAT), einem Verteilernetzwerk, einer r satellitengestützten Station und regenerativen terrestrischen Sendern (Ei), welche dazu ausgelegt sind, empfangene Benutzersignale gemäß einer selben Frequenz und einer selben Wellenform an Benutzerendgeräte (Tj) weiterzuleiten, und einer satellitengestützten Station (SS), welche dazu ausgelegt ist, die besagten weiterzuleitenden Benutzersignale an den besagten Satelliten (SAT) zu übertragen, **dadurch gekennzeichnet, dass** die besagten Sender (Ei) und die besagte satellitengestützte Station (SS) geeignet sind, ein Verfahren gemäß einem der vorstehenden Ansprüche auszuführen.
